# FASCICULE DE BREVET EUROPEEN

(11) **EP 0 643 218 B1**
(45) Date de publication et mention de la délivrance du brevet: **05.08.1998**
(21) Numéro de dépôt: 93402191.6
(22) Date de dépôt: 09.09.1993
(51) Int. Cl.: F02M 31/06

(54) **Dispositif d'ouverture d'un conduit et application de ce dispositif**
Leitungsöffnungsvorrichtung und ihre Anwendung
Conduit opening device and application for it

(43) Date de publication de la demande: 15.03.1995
(73) Titulaire: MECAPLAST SAM, MC-98000 Monaco (MC)
(72) Inventeur: Nuttin, Bernard, F-59200 Tourcoing (FR); Baclet, René, F-62199 Gosnay (FR)
(74) Mandataire: Debay, Yves

(56) Documents cités:
- FR-A- 2 550 581
- GB-A- 2 071 205
- GB-A- 2 084 250
- US-A- 4 248 197

## Description

La présente invention a pour objet un dispositif de commande d'ouverture d'un conduit, transportant du fluide ou du liquide, par un volet et les différentes applications de ce dispositif.

Une application peut être l'ouverture d'un obturateur d'air chaud dans un dispositif d'admission d'air pour permettre de réguler l'air d'aspiration en température.

Il est connu dans l'art antérieur des dispositifs de réglage de la température de l'air d'admission d'un moteur à combustion interne qui peuvent être classés en quatre familles. Une première famille constituée d'un élément thermostatique tel qu'une capsule à cire qui, en commandant le volet d'admission d'air chaud, permet d'obtenir un mélange à une température moyenne de 30°C. Or, les motoristes souhaitent alimenter le moteur avec de l'air frais en pleine charge et avec de l'air chaud lorsque la charge est faible. Une deuxième famille comportant un servomoteur pneumatique pour commander la température du mélange en fonction de la charge du moteur permet de résoudre ce problème. Une troisième famille constituée par des dispositifs tels que celui du brevet FR 2 367 924 associant un servomoteur pneumatique avec un thermostat à cire permet de réguler la température de l'air admis lors d'un fonctionnement en pleine charge, dans le cas de températures d'air extérieures très basses. Enfin, une quatrième famille est connue du GB-A-2 084 250 selon lequel le volet d'obturation de la canalisation est commandé dans un premier sens par un dispositif utilisant un ressort réalisé en alliage à mémoire de forme dès que la température s'élève et par un ressort de rappel qui actionne le volet dans le sens inverse du premier dès que la température chute.

Un premier but de l'invention est donc de proposer un dispositif de commande de l'ouverture d'un volet d'obturation d'une canalisation d'admission d'air qui soit simple à réaliser, plus facile à mettre en oeuvre et à fabriquer que les thermostats à cire, présentant une inertie moindre, supprimant la surcourse au-delà de la température maximum souhaitée et éliminant les huiles ou graisses, généralement à base de silicone, utilisées dans la fabrication de ces derniers.

Ce but est atteint par les caractéristiques de la revendication 1.

Un autre but de l'invention est de permettre l'utilisation du dispositif dans un ensemble correspondant aux caractéristiques de la troisième famille sans avoir les inconvénients liés aux thermostats à cire.

Ce but est atteint par le fait qu'un dispositif de réglage de la température de l'air comporte un servomoteur pneumatique dont la chambre de pression de commande est reliée directement ou indirectement au canal d'aspiration d'un moteur à combustion interne, caractérisé en ce que l'élément mobile du servomoteur est rendu solidaire du puits d'un dispositif de commande de l'ouverture d'un volet selon une des revendications 1 à 3.

D'autres particularités et avantages de la présente invention apparaîtront plus clairement à la lecture de la description ci-après faite en référence aux figures ci-après dans lesquelles :

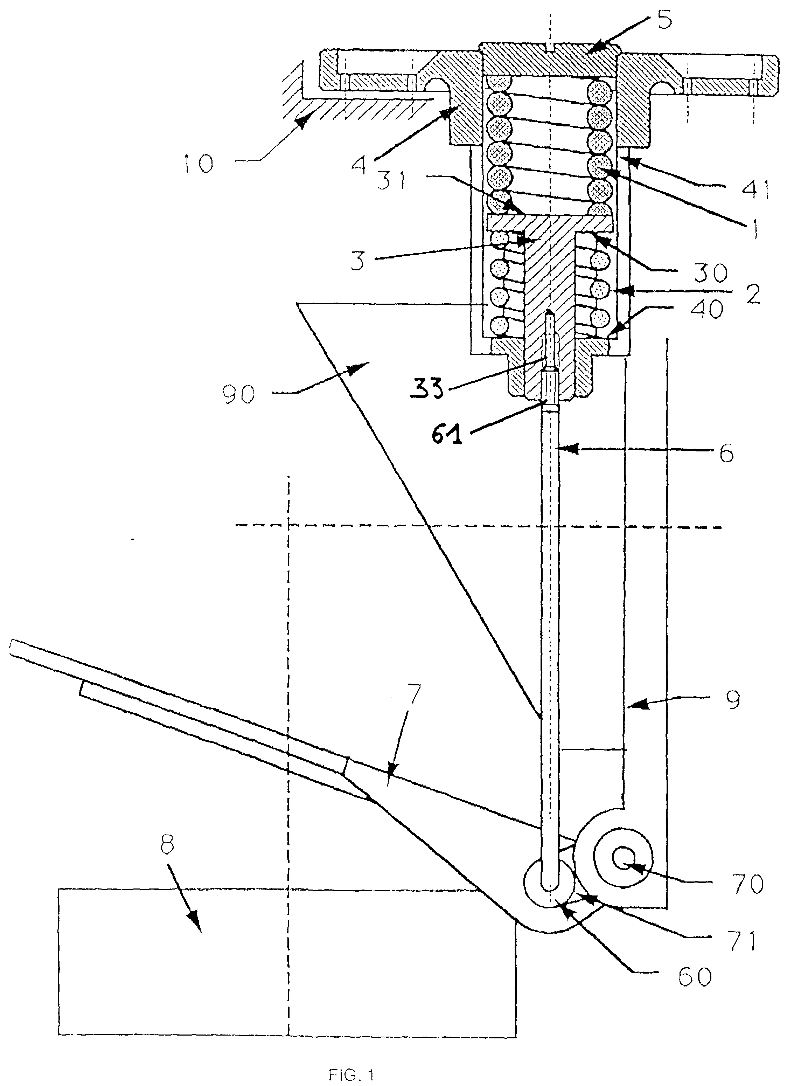

- la figure 1 représente le dispositif selon l'invention ;
- la figure 2 représente les courbes d'efforts appliqués pour des déplacements donnés.

Le dispositif de l'invention est constitué d'un ressort (1) réalisé en alliage à mémoire de forme et placé dans un puits (41) de façon à constituer un élément thermostatique (4) qui peut être placé dans un courant d'air ou de liquide mélangé pour, en fonction de la température de l'air ou du liquide mélangé, agir sur l'ouverture ou la fermeture d'une canalisation (8) de fluide chaud, tel que par exemple de l'air. Le ressort (1) agit sur un piston (3) pourvu d'un trou taraudé rendu solidaire d'une extrémité filetée (61) d'une tringlerie (6) dont une deuxième extrémité (60) commande, par l'intermédiaire d'un levier (71), le pivotement d'un volet (7) articulé autour d'un axe (70) monté sur un support (9) solidaire d'une canalisation (90) d'amenée de fluide froid pour être mélangé au fluide chaud provenant de la canalisation (8) de façon que la température du fluide mélangé reste entre deux températures données dans une plage. Sur la face (31) opposée à la face (30) du piston (3) agit le ressort (1). Un deuxième ressort (2) réalisé en acier à ressort agit entre la face opposée (30) du piston (3) et le fond (40) d'un puits (41). L'ensemble constitue l'élément thermostatique. Le puits (41) est fermé à son autre extrémité par un bouchon (5) réglable (par un filetage).

Le principe de fonctionnement du dispositif d'ouverture du conduit d'admission est le suivant.

Un objet en alliage à mémoire de forme peut être déformé par application d'une contrainte à une certaine température (T1), dite froide, de façon apparemment plastique et retrouver sa forme initiale par simple réchauffage au-dessus d'une autre température (T2), dite chaude. Le phénomène physique à l'origine de cette propriété est une transformation de type martensitique, c'est-à-dire que ces alliages possèdent, en fonction de la température, deux structures différentes :
- à la température T1 on dit que l'alliage est dans l'état martensitique,
- à la température T2 on dit que l'alliage est dans l'état austénitique.

L'alliage et la dimension du ressort sont calculés de façon à ce que la température de passage à l'état austénitique corresponde à la plage de température dans laquelle on veut que le volet se ferme.

Le ressort (1) est déformé à la température T1 pour qu'il ait la forme rétractée correspondant à l'ouverture de la canalisation par le volet (7).

Lorsque le dispositif thermostatique (4) est placé dans un courant d'air ou de fluide dont la température s'élève, la température du ressort (1) à mémoire de forme s'élève et le ressort atteint la température T2 et s'allonge en comprimant le ressort de rappel (2). Le déplacement de la tringle (6) ainsi occasionné provoque le pivotement du volet (7) vers sa position de fermeture du conduit d'admission (8).

Dès que la température du ressort (1) chute en dessous de T2, il se rétracte et le ressort de rappel (2) accélère le phénomène de retrait.

Dans une variante de réalisation, le ressort de rappel peut être du type ressort de traction et peut, dans ce cas, être logé à l'intérieur du ressort à mémoire de forme (1) et accroché sur la face (31) du piston (3).

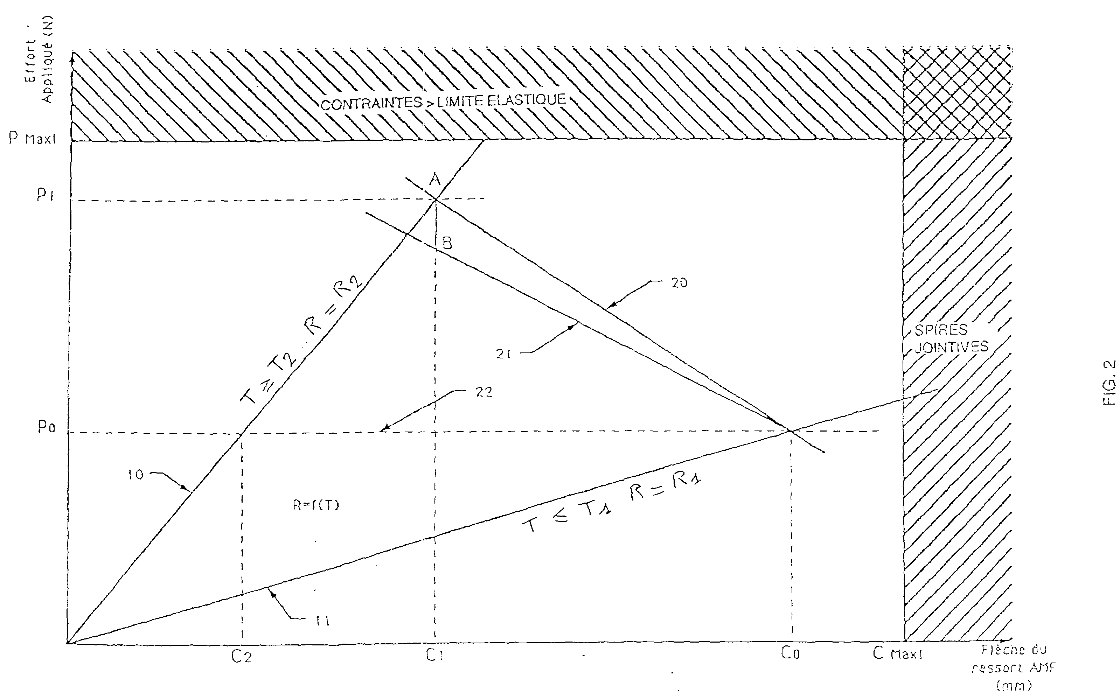

L'intérêt du dispositif thermostatique sera mieux compris à la lecture des explications concernant la figure 2 qui représente les efforts appliqués en fonction de la flèche.

Ainsi on peut considérer le ressort (1) réalisé en alliage à mémoire de forme comme l'association de deux ressorts différents (R1, R2), le premier (R2), représenté par la courbe (10) au-dessus d'une température T2 et le second R1, par la courbe (11) en dessous d'une température T1, avec une phase de transition d'un ressort à l'autre lorsque la température varie de T2 vers T1, et inversement où R = F (T).

Pour calculer ce ressort (1), il suffira donc de calculer deux ressorts différents, le premier ayant une flèche (C1) sous la charge (P1), au dessus de T2, le second ayant une flèche (C0) sous la charge (P0), au dessous de T1. La différence C0 - C1 est la course obtenue avec un effort P1 à C1 et un effort P0 à C0 dans la plage de température T2 à T1.

A l'identique d'un ressort conventionnel, il convient, pour le ressort (R2) de ne pas dépasser la contrainte maximum (P maxi) admissible de l'alliage, afin de rester dans le domaine élastique. Pour le ressort (Rl) il convient de ne pas dépasser la course maximum (C maxi) admissible qui est la position à spires jointives du ressort (1).

Dans la plage de température T2 à T1, on peut donc construire n thermostats différents qui sont fonction :
- du ressort de rappel (20, 21), de la précharge et de la raideur ;
- d'une butée température haute qui peut être simple arrêt de la course lorsque la courbe R = R2 est atteinte, ou qui peut être une butée mécanique si l'on désire limiter la plage de fonctionnement à une température inférieure à T2. C'est le cas par exemple avec le ressort de rappel (21) si la course est limitée à C1 ;
- d'une butée température basse Tl qui peut être un arrêt de la course lorsque la courbe R = R1 est atteinte ou bien d'une butée mécanique si l'on désire limiter la plage de fonctionnement à une température supérieure à T1 ou encore la position C maxi qui correspond au ressort à spires jointives.

Il faut noter que la course maximale (C2 à C0) est définie par l'intersection de P0 avec R1 d'une part et de P0 avec R2 d'autre part. Ceci est possible avec un ressort de rappel (22), cette course pourra être approchée par le ressort (22) dit superélastique disposant d'une très faible raideur.

Dans la pratique, il sera judicieux de choisir un ressort (1) en alliage à mémoire de forme légèrement surdimensionné afin d'absorber les efforts de frottement des pièces en mouvement et leurs tolérances de fabrication.

On comprend ainsi qu'en jouant sur les caractéristiques du ressort (1), du ressort de rappel (2) et de la cellule thermostatique (41, 40, 30, 31, 5) on arrive à modifier la course de la tringle, les températures de fonctionnement du dispositif thermostatique et l'hystérésis. Ainsi, par exemple, pour un même puits avec une même course et un ressort (1) identique, on peut changer les températures de fonctionnement en changeant la raideur du ressort de rappel.

Ceci permettra donc d'adapter le dispositif à une utilisation pour la fonction anti-givrage (anti-icing) correspondant à un fonctionnement dans une plage de température de - 20° C à + 20° C, ou à une utilisation classique de réchauffeur d'air d'admission correspondant à une plage de + 20° C à + 40°C.

Pour la fonction anti-givrage, le dispositif de réglage de la température de l'air comporte un servomoteur pneumatique dont la chambre de pression de commande est reliée directement ou indirectement au canal d'aspiration d'un moteur à combustion interne, caractérisé en ce que l'élément mobile du servomoteur est rendu solidaire du puits d'un dispositif thermostatique de commande de l'ouverture d'un volet.

## Revendications

1. Dispositif de commande de l'ouverture ou de l'obturation d'un volet d'obturation d'une canalisation pour un fluide, le volet d'obturation de la canalisation étant commandé dans un premier sens dès que la température s'élève au-dessus d'un premier seuil, par un dispositif utilisant un ressort réalisé en alliage à mémoire de forme et un ressort de rappel qui actionne le volet dans le sens inverse du premier sens dès que la température s'abaisse au-dessous d'un second seuil, le ressort (1) en alliage à mémoire de forme agissant sur une première face d'un piston (3) solidaire d'une tringlerie (6) actionnant le volet (7), le ressort de rappel agissant sur l'autre face du piston (3), caractérisé en ce que l'ensemble piston (3) ressort (1) en alliage à mémoire de forme et le ressort de rappel (2) sont disposés dans un puits (41) fermé par un bouchon (5) réglable.

2. Dispositif selon une des revendications précédentes, caractérisé en ce que les dimensions du puits peuvent être réglées pour modifier la course de la tringlerie (6).

3. Dispositif selon une des revendications précédentes, caractérisé en ce que la rigidité du ressort de rappel peut être modifiée pour adapter les caractéristiques de réponse en température du dispositif.

4. Dispositif de réglage de la température de l'air comportant un servomoteur pneumatique dont la chambre de pression de commande est reliée directement ou indirectement au canal d'aspiration d'un moteur à combustion interne, caractérisé en ce que l'élément mobile du servomoteur est rendu solidaire du puits d'un dispositif de commande de l'ouverture d'un volet selon une des revendications 1 à 3.

## Patentansprüche

1. Vorrichtung zur Steuerung des Öffnens oder des Schließens einer Verschlußklappe einer Leitung für eine Flüssigkeit, wobei die Leitungsverschlußklappe, sobald die Temperatur eine erste Schwelle überschreitet, in einer ersten Richtung durch eine Vorrichtung gesteuert wird, die eine aus einer Memory-Legierung gebildete Feder und eine Rückholfeder verwendet, die die Klappe in der zu der ersten Richtung entgegengesetzten Richtung betätigt, sobald die Temperatur unterhalb einer zweiten Schwelle sinkt, wobei die Memory-Legierungs-Feder auf eine erste Seite eines Kolbens (3) einwirkt, der mit einem die Klappe (7) betätigenden Gestänge (6) fest verbunden ist, dadurch gekennzeichnet, daß die Baugruppe aus dem Kolben (3), der Memory-Legierungs-Feder (1) und der Rückholfeder (2) in einem Schacht (41) angeordnet ist, der mit einem einstellbaren Stopfen (5) geschlossen ist.

2. Vorrichtung nach dem vorangehenden Anspruch, dadurch gekennzeichnet, daß die Abmessungen des Schachts eingestellt werden können, um den Hub des Gestänges (6) zu ändern.

3. Vorrichtung nach einem der vorangehenden Ansprüche, dadurch gekennzeichnet, daß die Steifigkeit der Rückholfeder verändert werden kann, um die Temperatur-Ansprechkennlinien der Vorrichtung anzupassen.

4. Vorrichtung zum Steuern der Luftemperatur, mit einem pneumatischen Servomotor, dessen Steuerdruckkammer unmittelbar oder mittelbar mit dem Ansaugkanal eines Verbrennungsmotors verbunden ist, dadurch gekennzeichnet, daß der bewegliche Teil des Servomotors fest mit dem Schacht einer Vorrichtung zur Steuerung des Öffnen einer Klappe nach einem der Ansprüche 1 bis 3 verbunden ist.

## Claims

1. Device for controlling the opening or closing of a flap for shutting off a conduit for a fluid, the flap for shutting off the conduit being controlled in a first direction, as soon as the temperature rises above a first threshold, by means of a device employing a spring, produced from a form memory alloy, and a return spring, which actuates the flap in the direction opposite to the first direction, as soon as the temperature falls below a second threshold, the spring (1) made from form memory alloy acting on a first face of a piston (3) integral with a linkage (6) actuating the flap (7), the return spring acting on the other face of the piston (3), characterized in that the assembly consisting of the piston (3) and of the spring (1) made from form memory alloy and the return spring (2) are arranged in a well (41) closed by means of an adjustable plug (5).

2. Device according to Claim 1, characterized in that the dimensions of the well can be adjusted in order to modify the stroke of the linkage (6).

3. Device according to one of the preceding claims, characterized in that the rigidity of the return spring can be modified in order to adapt the temperature response characteristics of the device.

4. Device for adjusting the air temperature, comprising a pneumatic servomotor, the control pressure chamber of which is connected directly or indirectly to the suction port of an internal-combustion engine, characterized in that the movable element of the servomotor is made integral with the well of a device for controlling the opening of a flap according to one of Claims 1 to 3.
